Europäisches Patentamt

European Patent Office

Office européen des brevets

(19)

(11) Publication number: **0 168 674**
A1

# (12) EUROPEAN PATENT APPLICATION

(21) Application number: **85107702.4**

(22) Date of filing: **21.06.85**

(51) Int. Cl.⁴: **B 23 K 35/26**, C 22 C 13/00 // H05K3/34

(30) Priority: **28.06.84 IT 4100484**

(43) Date of publication of application: **22.01.86** Bulletin 86/4

(84) Designated Contracting States: **DE FR GB**

(71) Applicant: **Passini, Angelo, Via Palestrina, 20, Monza (Milano) (IT)**

(72) Inventor: **Passini, Angelo, Via Palestrina, 20, Monza (Milano) (IT)**

(74) Representative: **Gervasi, Gemma et al, Studio Brevetti e Marchi NOTARBARTOLO & GERVASI 33, Viale Bianca Maria, I-20122 Milano (IT)**

(54) **Tin base alloy for soldering, having high resistance to the oxidation in the molten state.**

(57) Tin base alloy for soldering, particularly suitable for automatic soldering process of printed circuits and having high resistance to the oxidation in the molten state, which alloy comprises as essential components tin, lead, antimony and very small amounts of phosphorus equivalent to 0,015% and up to 0,001% by w. on the whole.

EP 0 168 674 A1

TIN BASE ALLOY FOR SOLDERING, HAVING HIGH RESISTANCE TO THE OXIDATION
IN THE MOLTEN STATE.

This invention is relevant to a tin base alloy suitable for soldering
metallic pieces and particularly fit for use in apparatuses for automatic soldering wherein the soldering alloy in the molten state,
arranged in a proper open container (cup), is brought into contact
with the piece to be soldered for a very short time. This soldering
method, as it is well known, is largely used in the manufacture of
printed circuits. The known apparatuses can be basically classified
in two types: those having a static soldering bath wherein the printed
circuit to be soldered is plunged for a very short time in the molten
alloy, and those having a dynamic soldering bath or "wave bath"
wherein the molten alloy, conveyed by a suitable pump, forms a stationary wave on which the printed circuit to be soldered is passed over,
in this way a contact between the soldering alloy and the piece being
obtained for a very short time.

It is well known that in this type of manufacturing the soldering
alloy must secure a perfect soldering of every connection point of
the circuit, contemporaneousIy and in very short time. Moreover it
must allow a working temperature not too high in order to avoid dama-
gements of the components of the printed circuit. Consequently it is
requested the use of high purity tin-lead alloys having composition
equal to or near the eutectic one (about 63% by w. tin and melting point about 183°C). A remarkable trouble of the above mentioned methods, wherein a large amount of molten alloy is kept at working temperature, in the order of 250°C, consists in the formation of metal oxide on the surface of the bath. This oxide can then mix with other substances present in the manufacturing such as, for example, soldering fluxes, and therewith it causes drosses which form on the surface of the bath and which have to be continuously removed in order to avoid trouble in the contact between the molten alloy and the points to be soldered.

The formation of oxides and consequently of drosses beside causing a loss of metallic alloy, in particular of tin, involves also a loss of time and more complexity of the operation due to the necessity of removing the above said oxides and drosses. The drosses sometime can mix with a certain amount of molten metal and this fact increases further the real loss of metal.

It has been now ascertained that an alloy consisting of tin, lead and antimony and containing also very little amount of phosphorus, shows a tendency to the oxidation at working temperatures of the above mentioned soldering processes, which is much more less than that of the conventional tin-lead alloys used in this technical field and of the same ternary alloys Sn/Pb/Sb already known in the art. The alloy according to the present invention contains from 51% to 57.5% by w. of tin, from 2% to 3.6% of antimony, from 0,015% to 0,001% of phosphorus, the balance to 100% being lead.

It has been ascertained, and this fact makes up an essential aspect of the present invention, that the very little amounts of phosphorus present in the alloy according to the invention, do not interfere with other substances present in the soldering process such as the fluxes and the liquid (oil) used in wave bath as protective sheet and as soldering coadiuvant.

The soldering performances of the alloy according to the invention are optimal and in any case not lower than that of the corresponding prior art alloys.

The preferred compositions are the following: from 54% to 57% by w. of Sn, from 2% to 3% of Sb, from 0.007% to 0.002% of phosphorus the balance to 100% being lead. The very little amount of phosphorus present in the alloy according to the invention doesn't change notably the melting temperature and the solidification range in comparison with the same alloys not containing phosphorus.

The extremely reduced oxidability in the molten state of the alloy according to the invention shows itself both in the use in static bath and in that of dynamic bath (or wave bath). The formation of oxides and consequently of drosses is extremely reduced, the bath of molten alloy remains for long time perfectly clean on the surface, the removal of drosses can be carried out at time interval much longer than that which occur with the usual alloys Sn/Sb having 60% or 63% by w. of tin, or with the ternary alloys Sn/Pb/Sb already known from the prior art and containing from 1.5% to 4% by w. of Sb and from 50% to 57.5% of Sn. Such alloys are described for instance by the French Patent 2.302.346 and in Gmelins "Handbuch der anorganischen Chemie" vol.47 (C) pages 1515 and 1539 (table) a ternary alloy is shown having 55% by w. of tin, 3.6% of antimony and 41.4% of lead and melting point minimum of 183°C. These alloys show some advantages in front of the conventional tin-lead alloys containing 60% or 63% of tin. With decreased percentage of tin and consequently with a reduced cost of the whole starting materials, it is possible to obtain alloys having low melting point, about the same of the eutectic alloy Sn/Pb with 63% Sn (about 183°C).

The soldering obtained with the above mentioned ternary alloys shows very good mechanical properties and a glossy appearance which persists for a long time. Furthermore the presence of antimony could reduce, in certain circumstances, the oxidability of the alloy at the use temperature.

The alloy according to the invention shows all the advantages above cited for the ternary alloys Sn/Pb/Sb of the prior art and furthermore affords a resistance to the oxidation, in the molten state, much higher than that of the ternary alloys of the prior art.

The preparation of the alloy according to the invention is carried out according to conventional methods: the metal components are completely molten and then phosphorus is introduced in form of tin-phosphorus composition or alloy which is prepared according to prior art processes. It is possible to use tin-phosphorus alloys having a very low content of phosphorus, in the average of 1% by w. and also much less. The molten mass has to be kept at temperature preferably not less than 300°C during the addition of the tin-phosphorus alloys and subsequently, after casting into mold, has to be cooled rapidly. In this way a perfectly homogeneous alloy is obtained.

An easy method for preparing the ternary Sn/Pb/Sb alloy containing phosphorus consists in melting the whole amount of Pb and increasing the temperature of the molten metal at a value higher than the melting point of the antimony (about 630°C). Then the antimony is added and it melts rapidly: consequently it is immediately diluted in the mass of molten lead.

In this way a possible oxidation of the antimony to $Sb_2O_3$ is avoided. Thereafter the tin is introduced and finally the tin/phosphorous alloy in amount corresponding to the preestablished content of phosphorus in the final alloy, is added at temperature of at least 300°C. Further step of the preparation as above said, with a fast cooling of the alloy.

The following examples are reported as illustrative of the present invention and are not limiting the same.

EXAMPLE 1

41.5 parts by w. of Pb are melted and the temperature is increased to 650°C, in the molten mass are then introduced 2.5 parts of Sb and the molten mass is mixed. Then 51.8 parts of Sn are added, the temperature is raised till 300°C and thereafter 4.82 parts of tin containing 0.11% by w. of phosphorus are added. The molten mass is cast in ingot mold provided with water cooling. The obtained alloy has the composition: 56% by w. Sn, 41.5% Pb, 2.5% Sb and 0.0053% P. For this alloy a solidification range of 1.7°C has been ascertained (start of solidification at 187.2°C, end at 185.5°C).

This alloy has been placed in a open cup of stainless steel, rectangular shape cm 20 x 10 and depth cm 7, provided with electrical heating and kept at constant temperature at 250°C. In two equal cups, always kept at 250°C, were placed comparison alloys, namely:

    comparison A  =  alloy Sb/Pb with 60% by w. Sn

    comparison B  =  alloy 56% Sn, 41.5% Pb, 2.5% Sb

In order to survey the behaviour in front of the oxidation, all traces of oxide and dross were removed mechanically from the surface of the molten alloy, in the three cups contemporaneously and thereafter the following surveys were carried out:

- after 1 minute one notes in comparison A a bluish colouring due to a very thin film of oxide on the surface of the molten alloy which nevertheless maintains mirror-like appearance; in comparison B one notes the same behaviour, the colouring however is very soft; and finally the alloy according to the invention shows a surface perfectly mirrow -like, without any change in appearance;

- after 5 minutes from the beginning of the test one notes in comparison A and B an intense colouring gold yellow due to a thin film of oxide; the alloy according to the invention shows none surface change;

- after 10 minutes from the beginning one notes in comparisons A and B the formation of a remarkable film of oxide: the alloy according to the invention shows none surface change;

- after 15 minutes the alloy according to the invention does not show any detectable trace of oxidation, the surface is perfectly unchanged and mirror-like.

The above said alloy has been used in the soldering of printed circuits in apparatus of wave bath type, at 250°C. For comparison purpose the same soldering process has been carried out with comparison B alloy and with a conventional Sn/Pb alloy containing 63% Sn.

The results obtained with the alloy of the invention were completely similar to those obtained with comparison B alloy, in particular as regards the completeness of the soldering points, the bright look, the absence of defects as "bridges" and "stalactites". The characteristics of the soldering were in the whole as good as those obtained with Sn/Pb alloy containing 63% Sn.

After a certain working time the whole amount of drosses, formed during the operation, was measured. The amounts measured in the tests come out to be in the following ratios between them: considering the value 100 for the amount formed from the eutectic alloy Sn/Pb, we obtained the value 92 for the comparison B alloy and the value 30 for the alloy according to the invention.

EXAMPLE 2

An alloy of composition: 55% Sn, 3% Sb, 42% Pb and 0.002% P was prepared with the method described in Example 1.

This alloy subjected to the oxidation test in the open cup, as described in Example 1, after 20 minutes at 250°C did not show any surface change or colouring, the look remaining perfectly mirror-like.

EXAMPLE 3

The same alloy of Example 2 was prepared, but containing phosphorus
in amount of 0.01% by w.  The oxidation test in the open cup gave
the same result of Example 2.

C L A I M S

1.  Soldering alloy, having high resistence against the oxidation in the molten state, consisting of tin, lead and antimony and containing from 0.001% to 0.015% by w. of phosphorus.

2.  Alloy according to claim 1, containing from 51% to 57.5% by w. tin, from 2% to 3.6% antimony, from 0.001% to 0.015% phosphorus, the balance to 100 per cent being lead.

3.  Alloy according to claim 1, containing from 54% to 57% tin, from 2% to 3% antimony, from 0.007 to 0.002% phosphorus, the balance to 100 per cent being lead.

4.  Alloy according to claim 1, containing 56% by w. tin, 2.5% antimony, from 0.015% to 0.001% phosphorus, the balance to 100 per cent being lead.

5.  Alloy according to claim 4 containing from 0.007% to 0.002% phosphorus.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 4, no. 116 (M-27)[598], 19th August 1980, page 154; & JP - A - 55 75 893 (TOKYO SHIBAURA DENKI K.K.) 07-06-1980 | 1 | B 23 K    35/26<br>C 22 C    13/00 //<br>H 05 K     3/34 |
| Y | IDEM | 5 | |
| | --- | | |
| X | WELDING RESEARCH SUPPLEMENT, vol. 54, no. 10, October 1975, pages 377s-383s, Miami, Florida, US; E.R. BANGS et al.: "Effect of low frequency thermal cycling on the crack susceptibility of soldered joints" * Page 378s, table 2 * | 1 | |
| | --- | | TECHNICAL FIELDS SEARCHED (Int. Cl.4) |
| D,Y | US-A-3 945 556  (H.H. MANKO) * Whole document * | 5 | |
| | ----- | | B 23 K<br>C 22 C |

The present search report has been drawn up for all claims

| Place of search | Date of completion of the search | Examiner |
|---|---|---|
| THE HAGUE | 04-10-1985 | MOLLET G.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82